# EUROPEAN PATENT SPECIFICATION

(11) **EP 2 907 678 B1**
(45) Date of publication and mention of the grant of the patent: **28.09.2016**
(21) Application number: 14155570.6
(22) Date of filing: 18.02.2014
(51) Int. Cl.: B60C 19/00

(54) **Noise absorber inside the tire cavity**
Geräuschabsorber im Reifeninnenraum
Absorbeur de bruit dans la cavité du pneu

(43) Date of publication of application: 19.08.2015
(73) Proprietor: Volvo Car Corporation, 40531 Göteborg (SE)
(72) Inventor: Nagy, Robert, 44350 Lerum (SE)
(74) Representative: Kraenzmer, Martin

(56) References cited:
- EP-A2- 0 911 185
- EP-A2- 1 574 360
- DE-A1- 19 926 039

## Description

### Field of the Invention

The present invention relates to a noise absorber for a wheel.

### Background

The comfort for a driver of a vehicle is receiving increasing attention in development of today's vehicles. Assisting tools such as sensors detecting and alerting the proximity of an obstacle are now available as well as smart windows which may selectively block light which may be disturbing for the driver. Furthermore, more streamlined designs of the vehicle allows for reduced noise inside the vehicle. Additionally, more sophisticated sound systems available also increase the comfort for the driver.

One source of noise which may bother the driver is cavity noise from the wheels of the vehicle. Cavity noise is generated by excitation of the air inside the closed tire in the cavity formed by the tire and the wheel rim. The air is excited by the deflection of the tire when the tire is rolling, whereby the generated noise is transmitted as structural borne noise into the chassis of the vehicle and is typically perceived as disturbing to a driver. The typical character of the noise is tonal and the frequency content is from 150 Hz to 250 Hz.

For relieving the effect of the noise, a noise absorbent material may be placed in the cavity, for example as disclosed by EP0911185 and EP1574360. However, adding material inside the tire causes an increased wheel mass, poses a risk of wheel imbalance, and it adds cost. Furthermore, the added material in the tire may be an obstacle when mounting the tire on the wheel rim. Thus, there is a need for an improved noise absorber.

### Summary of the Invention

In view of the above, it is a general object of the present invention to provide a simple noise absorbing member without compromising the noise absorbing performance.

According to a first aspect it is therefore provided a noise absorbing arrangement comprising a noise absorbing member and an adhesion element, the noise absorbing member comprising a core of fibrous material, wherein the noise absorbing member has an elongated shape formable to follow the circumference of the wheel rim between the rim flanges of the wheel rim, wherein the noise absorbing member comprises an outer sheet made from a woven material, the outer sheet surrounds the core of fibrous material, wherein at least a portion of the fibrous material is attached to an inner surface of the outer sheet, wherein fibers of the fibrous material are expandable to extend across the inside of the noise absorbing member when the noise absorbing member is circumferentially attached to the wheel rim and the wheel rim is rotating, wherein the adhesion element is adapted to attach the noise absorbing member inside a hollow space provided by the wheel rim and a tire, such that the noise absorbing member is arranged around at least a portion of the circumference of the wheel rim, and wherein a width of the adhesion element is smaller than a width of the noise absorbing member, when at rest; wherein the noise absorbing member (402) comprises a plurality of cuts (406) each extending across substantially the entire width of the noise absorbing member (402).

In accordance with the invention a fibrous material is a non-woven material with sound absorbing properties. Furthermore, the fibrous material is resilient such that the shape of a portion of the fibrous material may change in response to e.g. a centrifugal force without damaging the material. The fibrous material is further porous in order to absorb energy from propagating sound waves. The fibers are extendable to reach across the noise absorbing member either one by one or through connections between several fibers. Thus, two or more fibers may be connected such that they extend across the noise absorbing member from a side of the noise absorbing member adjacent to the adhesion element to the opposite side in a radial direction. Furthermore, the fibers may be randomly distributed or aligned.

The circumference of the wheel rim is the circumference around the rim along an annular shape of the wheel rim in the plane of rotation of the wheel rim when in use. The meaning of "at least a portion of the circumference" is that the noise absorbing member may follow only for example, 80%, 90%, or 95% of the entire circumference of the wheel rim. In other words, the elongated shape of the noise absorbing member when arranged on an outer surface, along the circumference, of the wheel rim may only reach partly around the circumference when mounted on the wheel rim. The width of the adhesion element and the noise absorbing member according to the invention are widths in a direction perpendicular to the circumferential direction of the wheel rim. In other words, the direction is perpendicular to a tangent of the noise absorbing member when arranged around the circumference of the wheel rim. The width is further in a direction perpendicular to the elongated shape of the noise absorbing member. In accordance with the invention, "at rest" means that the noise absorbing member is static, thus if the noise absorbing member is mounted on the wheel rim, via the adhesion element, the wheel rim is not rotating. Furthermore, the flanges are normally annular in shape and a tire is mounted in between the two flanges of the wheel rim.

The present invention is based on the realization that placing a fibrous material in the hollow space formed in a tire dampens the noise generated in the hollow space when the tire is in use, thus when the wheel rim rotates. It is further realized that a noise absorbing member comprising the fibrous material may be attached to the wheel rim, inside the space formed by the tire and the rim, using an adhesion element. Using an adhesion element for fastening the noise absorbing member may facilitate the mounting compared to other techniques. Furthermore, it is realized that the adhesion element should be made narrower than the width of the noise absorbing member which allows for the shape of the noise absorbing member to change when in use, which improves the noise absorbing properties of the noise absorbing member.

Furthermore, the woven material is arranged to protect the fibrous material during wheel assembly (otherwise the fibrous material could easily be torn or damaged). Moreover, the woven material ensures that the fibrous material is kept in place inside the noise absorbing member such that the fibrous material is distributed across the noise absorbing member. With the woven material, the adhesion element is attached to the woven material. The woven material is adapted to allow the shape of the noise absorbing member to change due to the centrifugal forces in a controlled manner during rotation. The woven material may be adapted to be acoustically transparent. In other words, the woven material allows sound waves to travel through the woven material with little or no resistance. In some examples, the woven material may be permeable to air. Furthermore, the outer sheet may be tubular, such that the outer sheet made from a woven material is in the form of a tube surrounding the fibrous core material.

Furthermore, the inner surfaces of the woven material and the fibrous material may be attached, thus bonded together. The bonding may be done in the manufacturing process. When the noise absorbing member is exposed to centrifugal forces it uniformly expands and thus the volume of the noise absorbing member increases and consequently the density of the fibrous material decreases which effectively improves the noise absorbing performance.

The apertures advantageously relieve stress in the noise absorbing member when attached around the circumference of the wheel rim. Furthermore, without the apertures the woven and fibrous material will stretch due to the curved surface of the wheel rim where the noise absorbing member is attached. The stretch could cause a permanent undesired compression of the fibrous material and also prevent is from expand due to centrifugal forces, thus, compromise the noise absorbing performance. The apertures may be cuts in the noise absorbing material made for example using a knife or similar. The cuts are preferably made at least half way through the noise absorbing member with the cuts being initiated at the outer circumference of the noise absorbing member. In other words, the apertures face the hollow space provided by the wheel rim and the tire when mounted on the wheel rim.

According to one embodiment, the adhesion element is arranged in a center region of the noise absorbing member along the elongated shape of the noise absorbing member. Arranging the adhesion element in the center region allows for a more adaptive and uniform shape change of the noise absorbing member when exposed to centrifugal forces.

According to one embodiment, the adhesion element is attached to the wheel rim around the circumference. For example, the adhesion element may be attached to the wheel rim before the noise absorbing member is attached. Prior attachment of the adhesion element may for example be made by automated adhesive application by a robot for instance. Thus, the adhesion element may be applied alone onto the rim as a first step. As a second step the noise absorbing member is mounted. Moreover, in order to properly attach the noise absorbing member to the wheel rim via the adhesion element, the adhesion element has to be thoroughly attached to the wheel rim.

In one embodiment of the invention, the width of the adhesion element may be smaller than 50% of the width of the noise absorbing member.

In one embodiment of the invention, the width of the adhesion element may be smaller than 25% of the width of the noise absorbing member.

In one embodiment of the invention, the fibrous material is deformable, wherein a shape of the noise absorbing member is adapted to change when the noise absorbing member is exposed to a centrifugal force. The centrifugal force may be generated from the motion of rotation of the wheel rim when in use. For example, the centrifugal force may be generated from the rotation of a wheel on a car or any other suitable vehicle. Since the adhesion element is narrower than the noise absorbing member, the centrifugal forces may cause a shape of the noise absorbing member to change more compared to having the noise absorbing member attached to the wheel rim across the entire width of the noise absorbing member. In other words, the shape of the noise absorbing member may change from a flat or substantially rectangular shape to a more rounded shape when exposed to the centrifugal force.

According to one embodiment of the invention, as a response to the centrifugal force a density of the fibrous material inside the woven material is adapted to decrease. Due the centrifugal forces, the portion of woven material which is not directly in contact and attached to the wheel rim via the adhesion element will be forced away from the wheel rim, thereby the woven material is deformed. Thus, the fibrous material being attached at the inner surface of the woven material inside the compartment formed by the woven material will expand as a result of the centrifugal force. Thereby, the density of the fibrous material will decrease which improves the noise absorbing performance of the fibrous material.

According to one embodiment of the invention, the density is adapted to decrease proportionally to a magnitude of the centrifugal force. In other words, the deformation of the woven material changes as a response to an increase in centrifugal force. Thereby, the volume of the fibrous material increases compared to when the centrifugal force is small, thus, decreasing the density of the fibrous material inside the woven material.

According to one embodiment of the invention, a cross section of the noise absorbing member is adapted to change, wherein the cross section is the intersection between the noise absorbing member and a plane perpendicular to said circumference of said wheel rim. Thereby, the cross section is in a plane comprising the axis of rotation of the wheel rim, such that the axis of rotation is parallel with any axis in the plane.

According to one embodiment of the invention, the width of the noise absorbing member is smaller than 50% of the width of the wheel rim. Normally, the noise absorbing member is narrower than the distance between the bead seat safety humps and has an outer surface diameter smaller than the rim diameter. A bead seat safety hump is a feature of a rim ensuring that the tire is kept in place also when the tire is deflated. With a wider cross sectional area, for example as a result of a wide noise absorbing member, the efficiency of the absorber increases, but so does the risk of wheel imbalance. The optimum tradeoff between these two is to be decided depending on the type of wheel and vehicle.

According to one embodiment of the invention, the apertures are evenly distributed along said elongated shape. For example, the cuts may be made such that when arranged around the circumference of the wheel rim, one aperture is arranged at every 60 degrees around the noise absorbing member. In one example, the cuts are made every 30 degrees.

According to one embodiment of the invention, the fibrous material is arranged in a non-woven configuration, the fibrous material comprising polyester fibers and/or polypropylene fibers. Such material has the advantage of a light weight material which inflicts no or limited imbalance to the wheel. For example, the fibrous material may be Thinsulate TC1803. However, other types and brands of lightweight acoustic absorbing materials may also be used.

According to one embodiment of the invention, the adhesion element is double sided tape. Using double sided tape for attachment of the noise absorbing member to the wheel rim enables a facilitated and relatively cheap assembly. The double sided tape may for example be 3M Transfer tape 350 9485PC.

According to a second aspect of the present invention there is provided a method of arranging a noise absorbing arrangement to a wheel rim, said noise absorbing arrangement comprising a noise absorbing member and an adhesion element configured to be attached to the noise absorbing member such that the adhesion element follows an elongated shape of said noise absorbing member, wherein said noise absorbing member comprises a core of fibrous material, said method comprises: providing cuts in said noise absorbing member, each cut extending across substantially the entire width of said noise absorbing member; attaching said adhesion element to said wheel rim between the flanges of said wheel rim; rotating said wheel rim around an axis of rotation of said wheel rim; wherein, as a result of said rotation, said noise absorbing member is attached via said adhesion element around at least a portion of a circumference of said wheel rim.

In accordance with the invention, the adhesion element may be separately applied to the wheel rim first and then as a subsequent step the noise absorbing member is attached to the wheel rim via the adhesion element. Alternatively, the adhesion element is first attached to the noise absorbing member such that they come as a single unit and then the noise absorbing member is attached to the wheel rim via the adhesion element.

Further effects and features of this second aspect of the present invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of Drawings

These and other aspects of the present invention will now be described in more detail, with reference to the appended drawings showing a currently preferred embodiment of the invention, wherein:
Fig. 1 illustrates a basic wheel rim layout;
Fig. 2 schematically shows an exemplary embodiment of the invention;
Fig. 3a-b are schematic cross-sections of an exemplary embodiment of the invention;
Fig. 4 shows an exemplary embodiment of the invention; and
Fig. 5 is a flow-chart and illustrations describing a method according to an exemplary embodiment of the invention;

### Detailed Description of Embodiments of the Invention

In the following description, the present invention is mainly described with reference to a noise absorbing member arranged on a wheel rim.

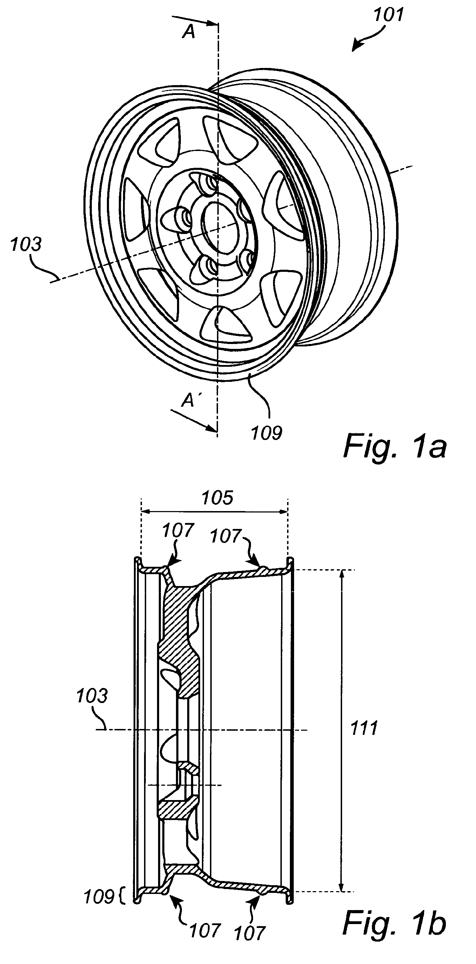

Figs. 1a-b illustrate a basic layout of a wheel rim 101 and a cross section (A-A') of the wheel rim 101 having a diameter 111. In Figs. 1 a there is indicated a central axis 103 (axis of rotation) of the wheel rim, and a rim flange 109. Fig. 1b shows the cross section (A-A') of the wheel rim 101 and indicates the central axis 103, a wheel rim width 105, bead seat safety humps 107 of the wheel rim 101, and the rim flanges 109. The bead seat safety humps 107 are intended to ensure a secure arrangement of a tire on the wheel rim even if the tire is deflated. A noise absorbing arrangement according to the invention should preferably be arranged on the wheel rim in between the safety humps 107. Thus, the noise absorbing member is preferably narrower than the distance between the bead seat safety humps 107. Furthermore, when the noise absorbing member is mounted on the wheel rim 101 the outermost circumference of the noise absorbing member may preferably not extend outside the flanges 109 in a radial direction, when the wheel is not rotating. In this way, having a smaller outermost diameter of the noise absorbing member compared to the wheel rim diameter with the flanges 109, the assembly of the tire and wheel will not be negatively affected. However, if the outermost surface diameter of the noise absorbing member is larger than the wheel rim diameter, the absorbing member would have to be deformed during the tire-wheel assembly which may damage the noise absorbing member.

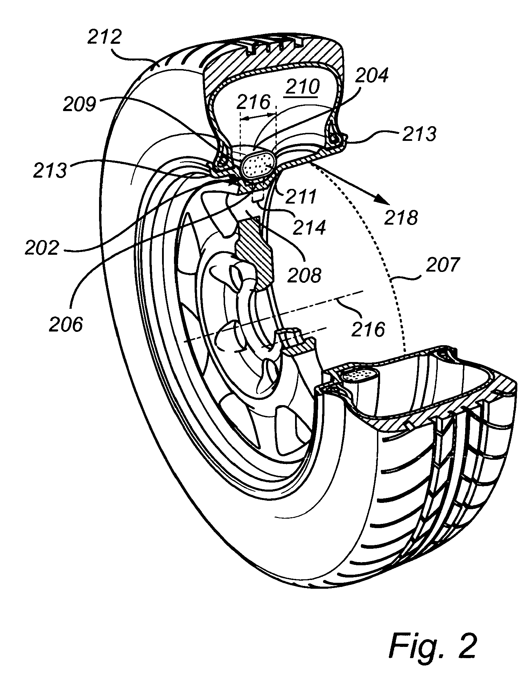

Fig. 2 illustrates an exemplary embodiment of the invention. Fig. 2 shows a noise absorbing arrangement 202 comprising a noise absorbing member 204 and an adhesion element 206. The noise absorbing member 204 is arranged along a circumference 207 of a wheel rim 208. In Fig. 2 the wheel rim 208 and the noise absorbing arrangement 202 is at rest, thus the wheel rim 208 is not rotating. Furthermore, the noise absorbing member 202 is arranged in the hollow space 210 formed by the wheel rim 208 and a tire 212, when the tire 212 is mounted on the wheel rim 208. The noise absorbing member 204 has an elongated shape and is formed to follow the circumference 207 of the wheel rim. The noise absorbing member 204 may or may not reach all the way around the circumference 207 of the wheel rim 208. For example, the noise absorbing member 204 may only reach 80% or 90% around the circumference 207, or it may for example reach 100% or more around the circumference 207. Furthermore, the noise absorbing member 204 is arranged between the flanges 213 of the wheel rim 208.

With further reference to Fig. 2, the noise absorbing member 204 comprises an outer sheet 209 made from a scrim material and a core 211 of fibrous material. Moreover, the adhesion element 206 is arranged in the contact surface between the noise absorbing member 204 and the wheel rim 208 in order to attach the noise absorbing member 204 to the wheel rim 208. The adhesion element 206 may for example be double sided tape (e.g. 3M Transfer tape 350 9485PC), a glue, or a spray-like glue applied before the noise absorbing member is attached to the wheel rim via the adhesion element. As is shown in Fig. 2, the width 214 of the adhesion element is smaller than the width 216 of the noise absorbing member 204. The widths 214, 216 are taken in a direction perpendicular to a tangent 218 of the circumference 207 of the wheel rim 208. The wheel rim 208 and tire 212 together with the noise absorbing arrangement may be mounted on a car, truck or similar. The noise absorbing member 204 is preferably made from a light weight material in order not to introduce any imbalance to the wheel and tire assembly. Furthermore, in the unlikely event that the noise absorbing member accidentally come loose inside the hollow space no, or very limited, imbalance is introduced.

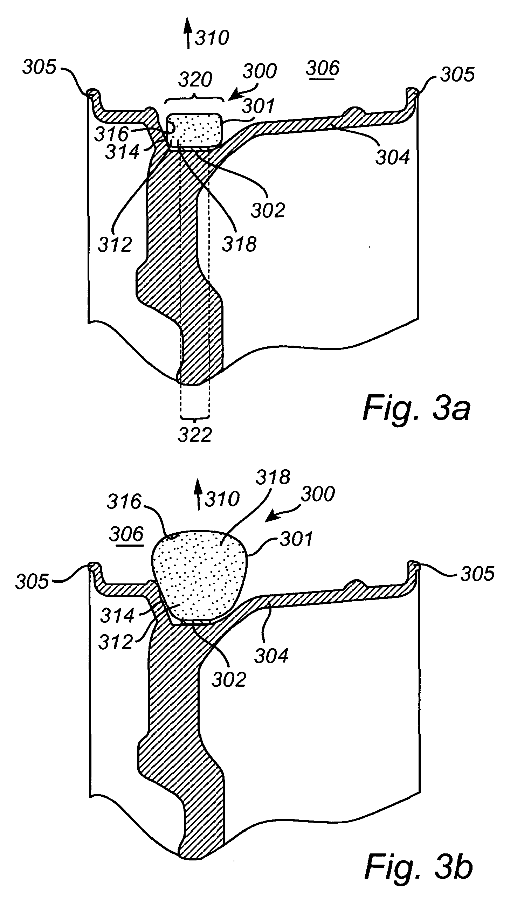

Fig. 3a-b are schematic cross-sections of a noise absorbing arrangement 300 according to an embodiment of the present invention. The cross-sections are taken in a plane perpendicular to the circumference 207 of the wheel rim 304In both Fig. 3a-b, the noise absorbing arrangement 300, comprising a noise absorbing member 301, and an adhesion element 302 are mounted on a wheel rim 304 inside the hollow space 306 formed by the wheel rim 304 and a tire 212. Furthermore, the noise absorbing arrangement 300 is arranged between the flanges 305 of the wheel rim 304. When the wheel rim 304 is rotating in use, the centrifugal force on the noise absorbing member 301 will be in the upwards direction indicated by the arrow 310 shown in Fig. 3a-b. Furthermore, the noise absorbing member 301 comprises a core 312 of fibrous material and an outer sheet 314 made from a scrim material. The fibrous material is a non-woven material and has the noise absorbing function. Furthermore, the fibrous material in the core 312 is a porous material. Example of porous fibrous sound absorbers are fibrous blankets, hair felt, wood-wool, acoustical plaster and some types of acoustical tiles. An exemplary material is Thinsulate TC1803 which is a material that allows temporarily compression without being damaged. Furthermore, Thinsulate TC1803 is a light weight material, resulting in a typical mass of a noise absorbing member 301 of about 8 g and 15 g for a noise absorbing member with dimensions of between 30 mm and 50 mm width and between 15 mm and 25 mm height for a 19" wheel rim. Moreover, after compression the material retains its shape. This is an advantageous feature of the absorbing material since the assembly of the wheel rim 304 and tire 212 is a physical and sometimes violent process. The Thinsulate TC1803 material itself is designed from a scrim material and a fibrous noise absorbing material. The scrim material 314 surrounds the fibrous material 312 in the cross-sections shown in Fig. 3a-b. Furthermore, the scrim material 314 and the fibrous material 312 are bonded together at the inner walls 316 of the scrim material 314. This way, the fibrous material 312 may be distributed over the entire inner compartment 318 of the scrim material. In Fig. 3a, a width 320 of the adhesion element 302 is smaller than a width 320 of the noise absorbing member 301. Furthermore, in Figs. 3a-b, the adhesion element 302 is arranged in a center region of the noise absorbing member 301.

More specifically, Fig. 3a shows a cross section of a noise absorbing arrangement 300, in a non-rotating condition, comprising the noise absorbing member 301 and the adhesion element 302 arranged to attach the noise absorbing member 301 to the wheel rim 304 between the flanges 305 of the wheel rim 304 in the circumferential direction. In other words, the wheel rim 304 and the noise absorbing member 301 are static in Fig. 3a. Preferably, the noise absorbing member 301 in is arranged such that the noise absorbing member 301 may not extend outside the flanges 305 in a radial direction, when the wheel 304 is not rotating, thus at rest. As shown in Fig. 3a-b, the noise absorbing member 301 is preferably arranged in the "rim drop center". In Fig. 3a, the noise absorbing member 301 has a substantially rectangular cross section. However, the invention is not limited to this cross section, thus the cross section of the noise absorbing member 301 may be e.g. elliptical, or have any other free-form shape. In Fig. 3a, the noise absorbing member 301 is in a relaxed state not experiencing any, or very small, centrifugal forces. A typical width of the noise absorbing member 301 is between 30 mm and 50 mm and a typical height is between 15 mm and 25 mm.

Fig. 3b shows the noise absorbing arrangement 300 and the wheel rim 304 in a rotating condition. A rotating condition may be achieved by that a car comprising the wheel rim 304 and the noise absorbing arrangement 300 driving such that the wheel rotates. This means the noise absorbing arrangement 300 experiences a centrifugal force in the radial direction 310 of the wheel rim 304. The fibrous material 312 and the scrim material 314 of the noise absorbing member 301 are deformable (thus, resilient) such that the shape of the noise absorbing member 301 changes when exposed to a centrifugal force. As can be seen in Fig. 3b, the shape of the cross section of the noise absorbing member 301 has changed compared to the shape of the cross section shown in Fig. 3a where no centrifugal force was present (thus, non-rotating condition). Furthermore, the fibrous material 312 is attached to the inside surface 316 of the scrim material 314 such that the fibrous material 312 uniformly, or substantially uniformly fills the inside compartment 318 formed by the scrim material 314. In other words, as the cross section of the noise absorbing member 301 changes, the fibrous material 312 still fills the inside compartment 318 of the scrim material 314 uniformly, or substantially uniformly. This way, since no fibrous material 312 is added when a centrifugal force is present the density of the fibrous material 312 of the noise absorbing member 301 decreases as the centrifugal force increases. Furthermore, the stronger the centrifugal force gets, the more the cross section (or the shape) of the noise absorbing member 301 changes, therefore the density of the fibrous material 312 also changes depending on the magnitude of the centrifugal force.

As a result of when the density of the fibrous material 312 inside the compartment 318 decreases due to centrifugal forces, acoustical properties of the material changes. For example the flow resistivity (R) will decrease due to the lower density of the material which allows for the sound waves to enter the material with less reflection. Moreover, while the flow resistivity decrease the porosity of the material in the core will increase. The sound waves in the tire mostly propagate at a grazing incidence (thus, the incidence angle is close to 90°) relative to the surface of the absorbing material in the cross-sections shown in Figs 3a-b. In other words, the sound waves propagate substantially perpendicular to the plane of the cross-sections in Figs. 3a-b. The lower density, and thus the decreased flow resistivity and the increased porosity of the material, allows an easier entry for the sound waves into the material without being reflected. This means that the efficiency of the absorber increases as the density decreases due to the centrifugal forces. Depending on the vehicle speed, the density of the lightweight absorber (e.g. TC1803) may preferably vary from a nominal value between 7.7 kg/m³ and 3 kg/m³.

Furthermore, as can be seen in Fig. 3b when compared to Fig. 3a, the noise absorbing member 301 expands radially inside the wheel. Thus, the outer surface diameter of the noise absorbing member 301 is normally larger than the wheel rim 304 diameter. However, for practical reasons, the noise absorbing member 301 should fit in the hollow space 306 (see also Fig. 2).

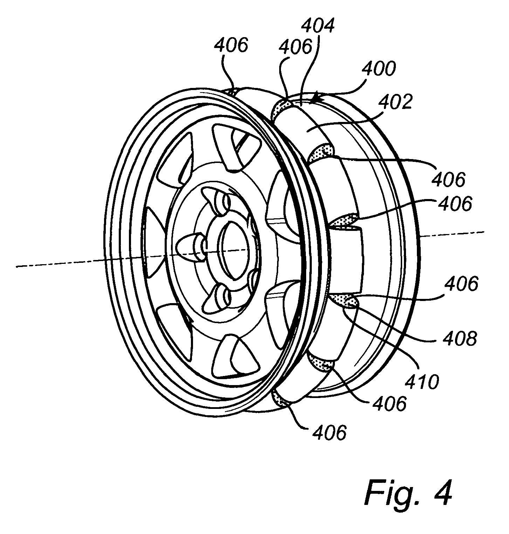

Fig. 4 illustrates a noise absorbing arrangement 400 according to an exemplary embodiment of the present invention. The noise absorbing arrangement 400 comprises a noise absorbing member 402 and an adhesion element (not visible). The adhesion element is adapted to attach the noise absorbing member 402 to a wheel rim 404 around the circumference of the wheel rim 404. The noise absorbing member 402 comprises a plurality of apertures 406 extending across the width of the noise absorbing member 402. The apertures 406 expose the inside of the noise absorbing member 402, thus exposing the fibrous material. The apertures 406 may be made by cutting through a portion of the noise absorbing member 402 in a direction towards the adhesion element. Thereby, the apertures 406 open up a portion of the outer sheet 410 made from scrim material and a portion of the core of fibrous material 408. The apertures 406 may for example extend halfway through the noise absorbing fibrous material 408. The apertures 406 advantageously relive stress in the noise absorbing member 402 when attached around the circumference 207 of the wheel rim 404. Furthermore, without the apertures 406 the scrim 410 and fibrous material 408 will stretch due to the curved surface of the wheel rim 404 where the noise absorbing member 402 is attached. The stretch would cause a permanent undesired compression of the fibrous material 408 and also prevent it from expanding when exposed to centrifugal forces, thus, compromise the noise absorbing performance. The apertures 406 may be arranged evenly distributed around the annular shape of the noise absorbing member 402, such as e.g. every 60 degrees or every 30 degrees. Although the apertures are depicted as evenly distributed in Fig. 4, the apertures may instead be distributed in other ways not evenly distributed, for example distributed more randomly.

In the case of having apertures 406 in the noise absorbing member 402, it is advantageous if the fibers of the fibrous material 408 are distributed in the lengthwise direction along the elongated shape of the noise absorbing member because there is less risk of any fibers to escape through the apertures 406 due to centrifugal forces. The risk is reduced because the strength of the absorber material is increased by the common distribution of the fibers in the elongated direction essentially perpendicular to the centrifugal forces when the wheel rim 404 is rotating.

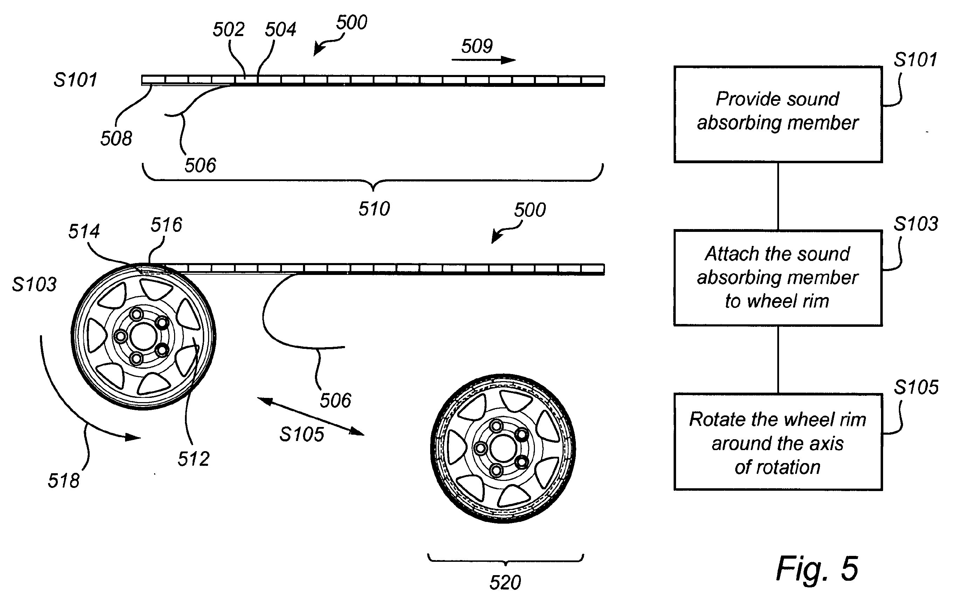

Fig. 5 illustrates step by step the assembling process for arranging a noise absorbing arrangement 500 to a wheel rim. The noise absorbing arrangement 500 comprises a noise absorbing member 502 and an adhesion element 508. In a first step S101 a sound absorbing member 502 in the shape of a beam is delivered from a supplier prior to mounting. Optional apertures 504 made by cuts are indicated in the drawing as well as an adhesive protection 506 for protecting the adhesion element 508 prior to mounting. The noise absorbing member 500 has a lengthwise direction 509 along an elongated shape of the beam like noise absorbing member 500. The adhesion element 508 being in the form of an adhesive strip 508 is premounted on the bottom of the beam 502. Furthermore, the adhesion element 508 is protected by a strip 506 that will be removed during mounting. The cuts 504 are not made all the way through the beam because the beam 502 must be strong enough not to break during assembly and such that the beam 502 is one part only. The length 510 of the beam is equal to or up to 10% less than the circumference of the wheel rim 512 at the intended location of mounting on the wheel rim, around a circumference of the wheel rim 512 (the location may be in the "rim drop center"). In a second step S103, a portion 514 of the adhesion element 508 is attached to a portion of the wheel rim 512. The portion of the wheel rim is in a location where a hollow space (e.g. 210) will be formed when a tire (e.g. 212) is properly mounted on the wheel rim 512. More precisely, the adhesive protection 506 is peeled off at one end 516 of the beam 502 and this end 516 of the beam 502 is attached to the wheel rim 512 between the flanges 109 of the wheel rim. In a subsequent step S105, the wheel rim is rotated indicated by the arrow 518 in the Fig. 5 and the adhesive protection 506 is gradually removed. As a result of the rotation 518, the noise absorbing member 502 in the form of a beam 502 is attached to the wheel rim 512 via the adhesion element 508. Thus, the noise absorbing member 502 will attach itself to the wheel rim 512 after one revolution of the wheel rim as shown with reference 520.

As an alternative, an adhesion element may be applied to the wheel rim in a first step, for example in the form of a spray or glue. In a subsequent step, the noise absorbing member is attached to the wheel rim via the pre-applied adhesion element.

Additionally, variations to the disclosed embodiments can be understood and effected by the skilled person in practicing the claimed invention, from a study of the drawings, the disclosure, and the appended claims. For example, the noise absorbing member may comprise several shorter noise absorbing members distributed in a line around the circumference of the rim. Furthermore, the shape of the wheel rims as shown in the drawings are only for exemplary purposes and are not to be considered as limiting to the scope of the invention.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A noise absorbing arrangement (202, 300, 400, 500) comprising a noise absorbing member (204, 301, 402, 502) and an adhesion element (206, 302, 508), said noise absorbing member (204, 301, 402, 502) comprising a core (211, 312, 408) of fibrous material,
wherein said noise absorbing member (204, 301, 402, 502) has an elongated shape formable to follow a circumference (207) of a wheel rim (101, 208, 304, 404, 512) between the rim flanges (109, 305) of said wheel rim,
wherein said noise absorbing member (204, 301, 402, 502) comprises an outer sheet (209, 314, 410) made from a woven material, said outer sheet surrounds said core (211, 312, 408) of fibrous material,
wherein at least a portion of said fibrous material is attached to an inner surface (316) of said outer sheet,
wherein fibers of said fibrous material are expandable to extend across the inside (318) of said noise absorbing member (204, 301, 402, 502) when the noise absorbing member (204, 301, 402, 502) is circumferentially attached to the wheel rim and the wheel rim is rotating,
wherein said adhesion element (206, 302, 508) is adapted to attach said noise absorbing member (204, 301, 402, 502) inside a hollow space (210, 306) provided by said wheel rim and a tire (212), such that said noise absorbing member (204, 301, 402, 502) is arranged around at least a portion of the circumference of said wheel rim, and
wherein a width (214, 322) of said adhesion element (206, 302, 508) is smaller than a width (320, 216) of said noise absorbing member (204, 301, 402, 502), when at rest;
**characterized in that** said noise absorbing member (402) comprises a plurality of cuts (406) each extending across substantially the entire width of said noise absorbing member (402).

2. The noise absorbing arrangement (202, 300, 400, 500) according to claim 1, wherein said adhesion element (206, 302, 508) is arranged in a center region of said noise absorbing member (204, 301, 402, 502) along said elongated shape of said noise absorbing member (204, 301, 402, 502).

3. The noise absorbing arrangement (202, 300, 400, 500) according to any of claims 1 or 2, wherein said adhesion element (206, 302, 508) is attached to said wheel rim around said circumference.

4. The noise absorbing arrangement (202, 300, 400, 500) according to any of the preceding claims, wherein said width of said adhesion element (206, 302, 508) is smaller than 50% of the width of said noise absorbing member (204, 301, 402, 502).

5. The noise absorbing arrangement (202, 300, 400, 500) according to any of claims 1 to 3, wherein said width of said adhesion element (206, 302, 508) is smaller than 25% of the width of said noise absorbing member (204, 301, 402, 502).

6. The noise absorbing arrangement (202, 300, 400, 500) according to any of the preceding claims, wherein said fibrous material is deformable, wherein a shape of said noise absorbing member (204, 301, 402, 502) is adapted to change when said noise absorbing member (204, 301, 402, 502) is exposed to a centrifugal force.

7. The noise absorbing arrangement (202, 300, 400, 500) according to claim 6, wherein, as a response to said centrifugal force a density of said core (211, 312, 408) is adapted to decrease.

8. The noise absorbing arrangement (202, 300, 400, 500) according to claim 7, wherein said density is adapted to decrease proportionally to a magnitude of said centrifugal force.

9. The noise absorbing arrangement (202, 300, 400, 500) according to claim 6 to 8, wherein a cross section of said noise absorbing member (204, 301, 402, 502) is adapted to change, wherein said cross section is the intersection between said noise absorbing member (204, 301, 402, 502) and a plane perpendicular to said circumference of said wheel rim.

10. The noise absorbing arrangement (202, 300,400, 500) according to any of the preceding claims, wherein the width of said noise absorbing member (204, 301, 402, 502) is smaller than 50% of the width of said wheel rim.

11. The noise absorbing arrangement (202, 300, 400, 500) according to claim 1, wherein said apertures are evenly distributed along said elongated shape.

12. The noise absorbing arrangement (202, 300, 400, 500) according to any of the preceding claims, wherein said fibrous material is arranged in a non-woven configuration, said fibrous material comprising polyester fibers and/or polypropylene fibers.

13. The noise absorbing arrangement (202, 300,400, 500) according to any of the preceding claims, wherein said adhesion element (206, 302, 508) is double sided tape.

14. A method of arranging a noise absorbing arrangement (202, 300, 400, 500) to a wheel rim, said noise absorbing arrangement comprising a noise absorbing member (204, 301, 402, 502) and an adhesion element (206, 302, 508) configured to be attached to the noise absorbing member such that the adhesion element (206, 302, 508) follows an elongated shape of said noise absorbing member (204, 301, 402, 502), wherein said noise absorbing member (204, 301, 402, 502) comprises a core (211, 312, 408) of fibrous material, said method comprises:
providing cuts in said noise absorbing member, each cut extending across substantially the entire width of said noise absorbing member;
attaching (S103) said adhesion element (206, 302, 508) to said wheel rim between the flanges of said wheel rim (101, 208, 304, 404, 512);
rotating (S105) said wheel rim around an axis of rotation of said wheel rim;
wherein, as a result of said rotation, said noise absorbing member (204, 301, 402, 502) is attached via said adhesion element (206, 302, 508) around at least a portion of a circumference of said wheel rim.

## Patentansprüche

1. Geräuschabsorberanordnung (202, 300, 400, 500), umfassend ein Geräuschabsorberelement (204, 301, 402, 502) und ein Adhäsionselement (206, 302, 508), wobei das Geräuschabsorberelement (204, 301, 402, 502) einen Kern (211, 312, 408) aus Fasermaterial umfasst,
wobei das Geräuschabsorberelement (204, 301, 402, 502) eine längliche Gestalt aufweist, die so formbar ist, dass sie einem Umfang (207) eines Radkranzes (101, 208, 304, 404, 512) zwischen den Felgenhörnern (109, 305) des Radkranzes folgt,
wobei das Geräuschabsorberelement (204, 301, 402, 502) ein äußeres Flächenstück (209, 314, 410) aus einem gewebten Material umfasst, wobei das äußere Flächenstück den Kern (211, 312, 408) aus Fasermaterial umgibt,
wobei wenigstens ein Abschnitt des Fasermaterials an einer Innenfläche (316) des äußeren Flächenstücks befestigt ist,
wobei Fasern des Fasermaterials expandierbar sind, damit sie sich über die Innenseite (318) des Geräuschabsorberelements (204, 301, 402, 502) erstrecken, wenn das Geräuschabsorberelement (204, 301, 402, 502) umfangsmäßig am Randkranz befestigt ist und sich der Radkranz dreht,
wobei das Adhäsionselement (206, 302, 508) dazu ausgelegt ist, das Geräuschabsorberelement (204, 301, 402, 502) in einem Hohlraum (210, 306), der von dem Randkranz (212) und einem Reifen bereitgestellt wird, zu befestigen, so dass das Geräuschabsorberelement (204, 301, 402, 502) um wenigstens einen Abschnitt des Umfangs des Randkranzes angeordnet ist, und
wobei eine Breite (214, 322) des Adhäsionselements (206, 302, 508) kleiner als eine Breite (320, 216) des Geräuschabsorberelements (204, 301, 402, 502) im Ruhezustand ist;
**dadurch gekennzeichnet, dass** das Geräuschabsorberelement (402) eine Vielzahl von Schnitten (406) umfasst, die sich jeweils im Wesentlichen über die gesamte Breite des Geräuschabsorberelements (402) erstrecken.

2. Geräuschabsorberanordnung (202, 300, 400, 500) nach Anspruch 1, wobei das Adhäsionselement (206, 302, 508) in einer mittleren Region des Geräuschabsorberelements (204, 301, 402, 502) entlang der länglichen Gestalt des Geräuschabsorberelements (204, 301, 402, 502) angeordnet ist.

3. Geräuschabsorberanordnung (202, 300, 400, 500) nach einem der Ansprüche 1 oder 2, wobei das Adhäsionselement (206, 302, 508) am Randkranz um den Umfang befestigt ist.

4. Geräuschabsorberanordnung (202, 300, 400, 500) nach einem der vorhergehenden Ansprüche, wobei die Breite des Adhäsionselements (206, 302, 508) weniger als 50% der Breite des Geräuschabsorberelements (204, 301, 402, 502) beträgt.

5. Geräuschabsorberanordnung (202, 300, 400, 500) nach einem der Ansprüche 1 bis 3, wobei die Breite des Adhäsionselements (206, 302, 508) weniger als 25% der Breite des Geräuschabsorberelements (204, 301, 402, 502) beträgt.

6. Geräuschabsorberanordnung (202, 300, 400, 500) nach einem der vorhergehenden Ansprüche, wobei das Fasermaterial verformbar ist, wobei eine Gestalt des Geräuschabsorberelements (204, 301, 402, 502) dazu ausgelegt ist, sich zu verändern, wenn das Geräuschabsorberelement (204, 301, 402, 502) einer Zentrifugalkraft ausgesetzt ist.

7. Geräuschabsorberanordnung (202, 300, 400, 500) nach Anspruch 6, wobei eine Dichte des Kerns (211, 312, 408) dazu ausgelegt ist, als Reaktion auf die Zentrifugalkraft abzunehmen.

8. Geräuschabsorberanordnung (202, 300, 400, 500) nach Anspruch 7, wobei die Dichte dazu ausgelegt ist, proportional zu einer Größe der Zentrifugalkraft abzunehmen.

9. Geräuschabsorberanordnung (202, 300, 400, 500) nach Anspruch 6 bis 8, wobei ein Querschnitt des Geräuschabsorberelements (204, 301, 402, 502) dazu ausgelegt ist, sich zu verändern, wobei der Querschnitt der Kreuzungspunkt zwischen dem Geräuschabsorberelement (204, 301, 402, 502) und einer Ebene senkrecht zum Umfang des Radkranzes ist.

10. Geräuschabsorberanordnung (202, 300, 400, 500) nach einem der vorhergehenden Ansprüche, wobei die Breite des Geräuschabsorberelements (204, 301, 402, 502) weniger als 50% der Breite des Radkranzes beträgt.

11. Geräuschabsorberanordnung (202, 300, 400, 500) nach Anspruch 1, wobei die Öffnungen gleichmäßig entlang der länglichen Gestalt verteilt sind.

12. Geräuschabsorberanordnung (202, 300, 400, 500) nach einem der vorhergehenden Ansprüche, wobei das Fasermaterial in einer Vlieskonfiguration angeordnet ist, wobei das Fasermaterial Polyesterfasern und/oder Polypropylenfasern umfasst.

13. Geräuschabsorberanordnung (202, 300, 400, 500) nach einem der vorhergehenden Ansprüche, wobei das Adhäsionselement (206, 302, 508) doppelseitiges Band ist.

14. Verfahren zur Anordnung einer Geräuschabsorberanordnung (202, 300, 400, 500) an einem Radkranz, wobei die Geräuschabsorberanordnung ein Geräuschabsorberelement (204, 301, 402, 502) und ein Adhäsionselement (206, 302, 508) umfasst, das dazu ausgelegt ist, am Geräuschabsorberelement befestigt zu werden, so dass das Adhäsionselement (206, 302, 508) einer länglichen Gestalt des Geräuschabsorberelements (204, 301, 402, 502) folgt, wobei das Geräuschabsorberelement (204, 301, 402, 502) einen Kern (211, 312, 408) aus Fasermaterial umfasst, wobei das Verfahren das Folgende umfasst:
Bereitstellen von Schnitten in dem Geräuschabsorberelement, wobei sich jeder Schnitt im Wesentlichen über die gesamte Breite des Geräuschabsorberelements erstreckt;
Befestigen (S103) des Adhäsionselements (206, 302, 508) an dem Radkranz zwischen den Flanschen des Radkranzes (101, 208, 304, 404, 512);
Drehen (S105) des Radkranzes um eine Drehachse des Radkranzes;
wobei infolge der Drehung das Geräuschabsorberelement (204, 301, 402, 502) durch das Adhäsionselement (206, 302, 508) um wenigstens einen Abschnitt eines Umfangs des Radkranzes befestigt wird.

## Revendications

1. Agencement d'absorption du bruit (202, 300, 400, 500) comprenant un élément d'absorption du bruit (204, 301, 402, 502) et un élément d'adhérence (206, 302, 508), ledit élément d'absorption du bruit (204, 301, 402, 502) comprenant une partie centrale (211, 312, 408) en matière fibreuse,
dans lequel ledit élément d'absorption du bruit (204, 301, 402, 502) présente une forme allongée qui peut être formée pour suivre une circonférence (207) d'une jante de roue (101, 208, 304, 404, 512) entre les rebords de jante (109, 305) de ladite jante de roue,
dans lequel ledit élément d'absorption du bruit (204, 301, 402, 502) comprend une feuille externe (209, 314, 410) constituée d'un matériau tissé, ladite feuille externe entoure ladite partie centrale (211, 312, 408) en matière fibreuse,
dans lequel au moins une partie de ladite matière fibreuse est fixée à une surface interne (316) de ladite feuille externe,
dans lequel les fibres de ladite matière fibreuse sont extensibles de sorte à s'étendre à travers la partie interne (318) dudit élément d'absorption du bruit (204, 301, 402, 502) lorsque l'élément d'absorption du bruit (204, 301, 402, 502) est fixé circonférentiellement à la jante de roue et que la jante de roue tourne,
dans lequel ledit élément d'adhérence (206, 302, 508) est conçu pour fixer ledit élément d'absorption du bruit (204, 301, 402, 502) à l'intérieur d'un espace creux (210, 306) aménagé par ladite jante de roue et un pneu (212) de telle sorte que ledit élément d'absorption du bruit (204, 301, 402, 502) soit disposé autour d'au moins une partie de la circonférence de ladite jante de roue, et
dans lequel une largeur (214, 322) dudit élément d'adhérence (206, 302, 508) est plus petite qu'une largeur (320, 216) dudit élément d'absorption du bruit (204, 301, 402, 502), lorsqu'il est au repos ;
**caractérisé en ce que** ledit élément d'absorption du bruit (402) comprend une pluralité de découpes (406) s'étendant chacune à travers sensiblement toute la largeur dudit élément d'absorption du bruit (402).

2. Agencement d'absorption du bruit (202, 300, 400, 500) selon la revendication 1, dans lequel ledit élément d'adhérence (206, 302, 508) est disposé dans une région centrale dudit élément d'absorption du bruit (204, 301, 402, 502) le long de ladite forme allongée dudit élément d'absorption du bruit (204, 301, 402, 502).

3. Agencement d'absorption du bruit (202, 300, 400, 500) selon l'une quelconque des revendications 1 ou 2, dans lequel ledit élément d'adhérence (206, 302, 508) est fixé à ladite jante de roue autour de ladite circonférence.

4. Agencement d'absorption du bruit (202, 300, 400, 500) selon l'une quelconque des revendications précédentes, dans lequel ladite largeur dudit élément d'adhérence (206, 302, 508) est plus petite que 50 % de la largeur dudit élément d'absorption du bruit (204, 301, 402, 502).

5. Agencement d'absorption du bruit (202, 300, 400, 500) selon l'une quelconque des revendications 1 à 3, dans lequel ladite largeur dudit élément d'adhérence (206, 302, 508) est plus petite que 25 % de la largeur dudit élément d'absorption du bruit (204, 301, 402, 502).

6. Agencement d'absorption du bruit (202, 300, 400, 500) selon l'une quelconque des revendications précédentes, dans lequel ladite matière fibreuse est déformable, dans lequel une forme dudit élément d'absorption du bruit (204, 301, 402, 502) est conçue pour changer lorsque ledit élément d'absorption du bruit (204, 301, 402, 502) est exposé à une force centrifuge.

7. Agencement d'absorption du bruit (202, 300, 400, 500) selon la revendication 6, dans lequel, en réponse à ladite force centrifuge, une densité de ladite partie centrale (211, 312, 408) est conçue de sorte à diminuer.

8. Agencement d'absorption du bruit (202, 300, 400, 500) selon la revendication 7, dans lequel ladite densité est conçue pour diminuer de façon proportionnelle à une grandeur de ladite force centrifuge.

9. Agencement d'absorption du bruit (202, 300, 400, 500) selon la revendication 6 à 8, dans lequel une section transversale dudit élément d'absorption du bruit (204, 301, 402, 502) est conçue pour changer, dans lequel ladite section transversale est l'intersection entre ledit élément d'absorption du bruit (204, 301, 402, 502) et un plan perpendiculaire à ladite circonférence de ladite jante de roue.

10. Agencement d'absorption du bruit (202, 300, 400, 500) selon l'une quelconque des revendications précédentes, dans lequel la largeur dudit élément d'absorption du bruit (204, 301, 402, 502) est plus petite que 50 % de la largeur de ladite jante de roue.

11. Agencement d'absorption du bruit (202, 300, 400, 500) selon la revendication 1, dans lequel lesdites ouvertures sont réparties de manière égale le long de ladite forme allongée.

12. Agencement d'absorption du bruit (202, 300, 400, 500) selon l'une quelconque des revendications précédentes, dans lequel ladite matière fibreuse est disposée selon une configuration non tissée, ladite matière fibreuse comprenant des fibres de polyester et/ou des fibres de polypropylène.

13. Agencement d'absorption du bruit (202, 300, 400, 500) selon l'une quelconque des revendications précédentes, dans lequel ledit élément d'adhérence (206, 302, 508) est un ruban adhésif à double face.

14. Procédé permettant de disposer un agencement d'absorption du bruit (202, 300, 400, 500) sur une jante de roue, l'agencement d'absorption du bruit comprenant un élément d'absorption du bruit (204, 301, 402, 502) et un élément d'adhérence (206, 302, 508) configuré de sorte à être fixé à l'élément d'absorption du bruit de telle sorte que l'élément d'adhérence (206, 302, 508) suive une forme allongée dudit élément d'absorption du bruit (204, 301, 402, 502), dans lequel ledit élément d'absorption du bruit (204, 301, 402, 502) comprend une partie centrale (211, 312, 408) en matière fibreuse, ledit procédé comprenant :
ménager des découpes dans ledit élément d'absorption du bruit, chaque découpe s'étendant à travers sensiblement toute la largeur dudit élément d'absorption du bruit ;
fixer (S103) ledit élément d'adhérence (206, 302, 508) à ladite jante de roue entre les rebords de ladite jante de roue (101, 208, 304, 404, 512) ;
faire tourner (S105) ladite jante de roue autour d'un axe de rotation de ladite jante de roue ;
dans lequel, à la suite de ladite rotation, ledit élément d'absorption du bruit (204, 301, 402, 502) est fixé, par le biais dudit élément d'adhérence (206, 302, 508), autour d'au moins une partie d'une circonférence de ladite jante de roue.
